# EUROPEAN PATENT APPLICATION

(11) **EP 2 008 792 A1**
(43) Date of publication of application: **31.12.2008**
(21) Application number: 07707694.1
(22) Date of filing: 30.01.2007
(51) Int. Cl.: B29C 47/14, C08J 9/12, B29K 105/04, B29L 7/00

(54) **PROCESS FOR PRODUCTION OF FOAMED RESIN SHEETS**

(30) Priority: 18.04.2006 JP 2006114812
(71) Applicant: Fuji Seal International, Inc., Osaka-shi, Osaka 538-0041 (JP)
(72) Inventor: HASEGAWA, Minoru, Osaka-shi Osaka 538-0041 (JP)
(74) Representative: Skuhra, Udo
(86) International application number: PCT/JP2007/051476
(87) International publication number: WO 2007/122832

(57) **Abstract**

The invention provides a process for production of foamed resin sheet which enables satisfactory dispersion of a nucleating agent in a thermoplastic resin and which attains excellent extrusion formability and is excellent in productivity. There is provided a process for production of foamed resin sheet by extruding a thermoplastic resin prepared by incorporating a nucleating agent and a foaming agent consisting of a gas containing at least one of nitrogen and carbon dioxide into a thermoplastic resin, **characterized in that** the process further comprises incorporating into the thermoplastic resin high molecular weight ester and a wetting agent having a kinematic viscosity coefficient (a kinematic viscosity coefficient at 100°C; centistokes) of 70 to 2700.

## Description

### FIELD OF THE INVENTION

The present invention relates to a process for production of foamed resin sheet, and more particularly to a process for production of foamed polystyrene sheet having heat shrinkability.

### BACKGROUND OF THE INVENTION

As a process for production of, for example, foamed styrene sheet as foamed resin sheet, there is employed a process, which involves incorporating a nucleating agent into general purpose polystyrene as a base resin, and then injecting a foaming agent thereinto.
Hitherto, as the foaming agent, there have been used chlorine fluoride gas such as chlorofluorocarbon, or alkanes such as pentane and butane, which are volatile at room temperature, but in these days, carbon dioxide, nitrogen or the like of the atmospheric constituents are used in consideration of environmental problems.
As the nucleating agent, there has been used sodium bicarbonate, citric acid, azodicarboxylic acid amide or the like in order to reduce the size of bubbles (sometimes referred also as "cells") of foamed styrene sheet, or to provide bubbles of controlled uniform size (Patent Document 1).

Meanwhile, when produced foamed styrene sheet is used in various applications, such as film labels for container, it is essential to control the size of cells, density and the like of foamed styrene sheet during the production process. For example, in an application requiring heat insulating properties, there is a demand for the uniform control of the cells of foamed styrene sheet to provide with a small cell size, small density or small wall thickness to reduce a thermal conductivity. In an application requiring appropriate stiffness, there is a demand for uniform control of the cells to provide with an appropriate size. Furthermore, in an application in which the foamed styrene sheet is printed, there is a demand for uniform control of cells to provide with a desired and uniform size and control of the smoothed level of the sheet surface, the whiteness (opacity) or the like.
In order to control these cells, it is necessary to adjust many factors, such as the kind and amount of the foaming agent, the molten resin temperature, the resin viscosity, and the kind and amount of the nucleating agent for forming cells. Especially for the uniform control, it is essential to adjust the particle size of the nucleating agent and achieve the homogeneous dispersion of the nucleating agent in polystyrene.

However, while much attention is paid to the adjustment of the particle size of the nucleating agent, it is hardly found that the homogeneous dispersion of the nucleating agent has been positively investigated. In this regard, only the mixing or coating and impregnating general mineral oil, such as white mineral oil as a wetting agent (lubricant), into a base resin, is being under investigation, while taking into account the dispersibility of the nucleating agent into polystyrene (Patent Document 2).

When foamed styrene sheet is produced by using chlorofluorocarbon or pentane as a foaming agent in the same manner as the conventional art, the viscosity of molten polystyrene is adjusted by the solvating action of the foaming agent, with the result that the extrusion formability becomes favorable. However, in a process for production of foamed styrene sheet using carbon dioxide, nitrogen and the like as the foaming agent as mentioned above, a similar solvating action is not expected, and therefore high molecular weight ester is incorporated into polystyrene in order to compensate for it.
The main purpose to be accomplished by incorporating high molecular weight ester is to improve the chemical and physical characteristics of foamed styrene sheet and prevent changing of the same in aging, as well as prevent changing of the mechanical characteristics, such as gauge band. However, even incorporating high molecular weight ester into polystyrene is not sufficient in terms of lubricating the nucleating agent and hence positively improving the extrusion formability of foamed styrene sheet, thus posing a problem of insufficient productivity of foamed polystyrene sheet.
This kind problem is not inherent to the production of foamed styrene sheet, but is caused generally in production of thermoplastic foamed resin sheet.

Patent Document 1: Japanese Examined Patent Application Publication No. Hei-7-64005 (USP 5,082,608)
Patent Document 2: Japanese Unexamined Patent Application Publication No. Hei-9-194621 (USP 6,177,036)

### SUMMARY OF THE INVENTION

### PROBLEMS TO BE SOLVED BY THE INVENTION

In consideration of the above problems, it is an object of the present invention to provide a process for production of foamed resin sheet which enables satisfactory dispersion of a nucleating agent in a thermoplastic resin and which attains excellent extrusion formability and is excellent in productivity.

### MEANS TO SOLVE THE PROBLEMS

In order to solve the above problems, there is provided a process for production of foamed resin sheet by extruding a thermoplastic resin prepared by incorporating a nucleating agent and a foaming agent consisting of a gas containing at least one of nitrogen and carbon dioxide into a thermoplastic resin, characterized in that the process further includes incorporating into the thermoplastic resin, high molecular weight ester and a wetting agent having a kinematic viscosity coefficient (a kinematic viscosity coefficient at 100°C; centistokes (cSt)) of 70 to 2700.

In the present invention, the nucleating agent is preferably a mixture of sodium bicarbonate and citric acid.
The mixing ratio of the wetting agent and the high molecular weight ester in the thermoplastic resin composition is referably in the range of 25:75 to 75:25 on a weight basis.
Furthermore, the wetting agent is preferably polybutene, and more preferably the number average molecular weight (Mn) of the polybutene is 700 to 2100.
The high molecular weight ester is preferably at least one of ditridecyl adipate, diisodecyl adipate and trioctyl trimellitate.

By the high molecular weight ester is herein meant high molecular weight ester having a molecular weight of 350 or more.
By the kinematic viscosity coefficient is herein meant a kinematic viscosity at 100°C measured based on JIS K2283.
Still furthermore, by the number average molecular weight is herein meant a number average molecular weight measured by gel permeation chromatography. The followings are measuring conditions thereof.
GPC device: GPC device Model M2 manufactured by Tosoh Corporation
Detector: Differential refractometer detector R1 manufactured by Tosoh Corporation
Column: TSKgel manufactured by Tosoh Corporation, GMHxl (two columns), G2500Hxl (one column)
Solvent: THF
Injection Volume: 0.2 ml
Flow Rate: 1.0 ml/min
Temperature: 23°C
Standard Sample: Monodisperse polystyrene

### ADVANTAGES OF THE INVENTION

According to the process for production of foamed resin sheet of the present invention, in addition to high molecular weight ester, a predetermined wetting agent is incorporated. Thus, it is possible to sufficiently disperse a nucleating agent in a thermoplastic resin, and achieves excellent extrusion formability and productivity.

### BRIEF DESCRIPTION OF THE DRAWINGS

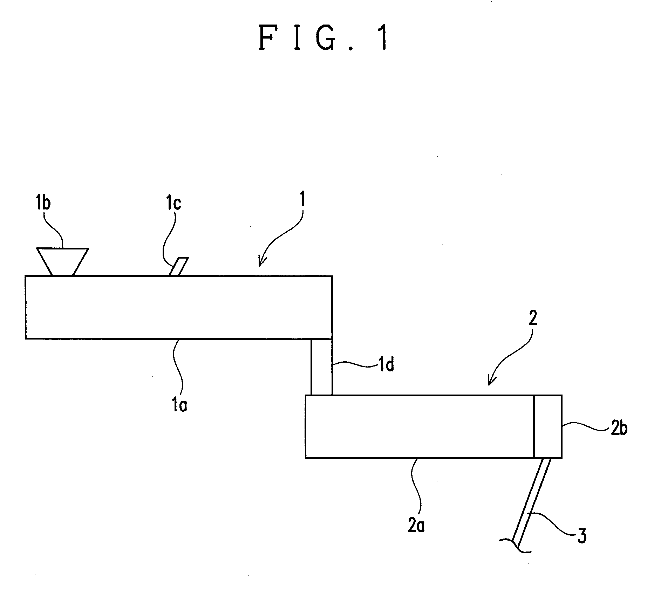

FIG. 1 is a schematic side view of a tandem extruder system.

### DESCRIPTION OF THE REFERENCE NUMERALS

1: first extruder 2: second extruder

### BEST MODE FOR CARRYING OUT THE INVENTION

A process for production of foamed resin sheet of this embodiment involves incorporating a nucleating agent, a foaming agent, high molecular weight ester and a wetting agent into a molten thermoplastic resin, thus providing a molten thermoplastic resin composition, and extruding the thermoplastic resin composition into foamed resin sheet.
In this embodiment, as the thermoplastic resin, for example, polystyrene can be used.
As the foaming agent, for example, a single gas such as carbon dioxide and nitrogen, or a mixed gas such as atmospheric gas containing these gases may be used, and as the nucleating agent, for example, a mixture of sodium bicarbonate and citric acid can be used.
The wetting agent is to improve the dispersibility of a nucleating agent in a thermoplastic resin, and as the wetting agent, for example, polybutene having a kinematic viscosity coefficient (cSt 100°C) of 70 to 2700 can be used. Furthermore, while the high molecular weight ester is incorporated in order to improve the physical characteristics of foamed resin sheet (e.g., to suppress change in aging of the size of sheet and change in aging of the heat shrinkability etc.), it acts as a plasticizer as well. Thus, as the high molecular weight ester, it is possible to use non-volatile ester having a molecular weight of 350 or more, and more specifically at least one of adipate ester such as ditridecyl adipate (DTDA) and diisodecyl adipate (DIDA), and trioctyl trimellitate (TOTM).
The order in which the foaming agent, the nucleating agent, the high molecular weight ester and the wetting agent are incorporated into the resin is not necessarily limited to a specific order, but usually the foaming agent is finally incorporated into the resin.

In this embodiment, usually, the amount of the foaming agent to be incorporated is 3% by weight or less relative to the total amount of the resin composition, the amount of the nucleating agent to be incorporated is 2% by weight or less relative to the total amount of the resin composition, the amount of the high molecular weight ester to be incorporated is 2% by weight or less relative to the total amount of the resin composition, and the amount of the wetting agent to be incorporated is 2% by weight or less relative to the total amount of the resin composition, and preferably, the amount of each of the foaming agent, the nucleating agent, the high molecular weight ester and the wetting agent is, in this order, 0.5 to 2% by weight, 0.1 to 1.5% by weight, 0.5 to 1.5% by weight and 0.5 to 1.5% by weight.

In this embodiment, more specifically, general purpose polystyrene as a thermoplastic resin, and a mixture of polybutene as a wetting agent having a kinematic viscosity coefficient (cSt 100°C) of 70 to 2700 and a powdered nucleating agent (sodium bicarbonate, citric acid, etc.) or simply a mixture of the polybutene and a nucleating agent are molten and mixed, then gas containing at least one of nitrogen and carbon dioxide is injected as a foaming agent into the molten polystyrene, along with the high molecular weight ester, and then the operation is made for extrusion.

It is not necessary to limit an extruder system for use in extrusion to a specific type, but generally a tandem extruder system is used.
As illustrated in FIG. 1, the tandem extruder system includes, for example, first and second extruders 1, 2, in which the first extruder melts a resin composition at a relatively high temperature and mixes the same to provide a homogeneous mixture, and the second extruder again mixes the resin composition, which has been sufficiently and homogeneously mixed at the first extruder, at a relatively low temperature suitable for foam extrusion, while at the same time extruding the same via a die 2b.
Specifically, the first extruder 1 includes a first extruder body 1a having a tubular shape and a screw disposed inside thereof for moving a resin or the like, which has been fed therein, from a inlet side to a outlet side of the first extruder body 1a, while at the same time melting and mixing the resin, a hopper 1b disposed on the inlet side of the body 1a for feeding a resin or the like, a foaming-agent injection port 1c disposed at an intermediate position between the inlet side and the outlet side of the body 1a for injecting a foaming-agent gas into the body 1a, and an interconnection portion 1d disposed on the outlet side for supplying the mixed resin or the like to a inlet side of the second extruder.
The second extruder 2 includes a second extruder body 2a having a tubular shape and a screw disposed inside thereof for moving a resin or the like, which has been supplied through the interconnection portion 1d, to a outlet side of the second extruder 2, while at the same time mixing the same, so that the resin or the like is mixed while at the same time the temperature of the resin or the like is cooled to a temperature suitable for foam extrusion, and an annular die 2b disposed on the outlet side of the body 2a for extruding the resin or the like into a continuous annular sheet 3.
Each of the extruders usually includes a pressure regulator, a heater, a gas booster, an accumulator, a flowmeter, a flow control valve, etc., according to needs and circumstances.

When using this tandem extruder system, for example, polystyrene, polybutene as a wetting agent, and sodium bicarbonate and citric acid as a nucleating agent are first fed into the hopper, then they are molten and mixed at the first extruder, and then atmospheric gas or the like is injected through the foaming-agent injection port. Then, a polystyrene composition which has been sufficiently and homogeneously mixed is transferred to the second extruder through the interconnection portion.
As the high molecular weight ester, usually non-volatile type such as adipate ester is used. When using this type, it is possible to employ a process in which the non-volatile ester is previously mixed with a foaming agent and then incorporated into a thermoplastic resin, or a process in which the non-volatile ester is incorporated into a thermoplastic resin separately from the foaming agent.

At the second extruder, the resin composition transferred therein is cooled to a melt temperature suitable for extrusion, and then is extruded into an annular sheet form through the annular die disposed at an outlet of the second extruder. Then, before the temperature of the sheet is cooled to a softening temperature (glass transition point) or lower, the sheet is subjected to the stretching operation so as to possess heat shrinkable characteristics, then is cooled by a mandrel (a mandrel disclosed in Japanese Examined Patent Application Publication No. Hei-7-64005 (USP5,082,608), then wound up onto a reel as a heat shrink film. Thus, a foamed resin sheet can be produced.

In this embodiment, a molten polystyrene composition, which has been mixed with gas containing carbon dioxide, nitrogen or the like as a foaming agent, high molecular weight ester, sodium bicarbonate and citric acid as a nucleating agent and polybutene as a wetting agent, may be used to make it possible to greatly reduce the energy required for extrusion into a foamed sheet having a predetermined size. In addition, it is possible to reduce the amount of the foaming agent to be added to obtain desired characteristics, enhance the productivity and reduce the production cost.
The effect of polybutene incorporated as a wetting agent into the molten polystyrene and the effect of high molecular weight ester as a plasticizer such as adipate ester produce a synergistic effect of achieving excellent extrusion processability.
Furthermore, since gas containing at least one of nitrogen and carbon dioxide is used as a foaming agent, no substance that vaporizes at room temperature exists, unlike a conventional process in which a foaming agent, such as alkanes such as pentane, and chlorofluorocarbon that is highly volatile at room temperature is used. Therefore, less substantial change in the extruded film characteristics (including heat shrinkability) in aging occurs, and no substantial influence is applied on the dimensional stability of a gauge band or the like.
Polybutene acts as a plasticizer as well as acting as a wetting agent of a nucleating agent such as sodium bicarbonate and citric acid. Therefore, when polybutene is used along with high molecular weight ester such as DTDA, its plastic forming can be controlled with high accuracy by adjusting the viscosity of the molten polystyrene during extrusion, and therefore it is possible to extrude it into a foamed polystyrene sheet by a small extrusion energy, thus greatly contributing to the improvement of the extrusion processability. Furthermore, since polybutene is chemically stable, less change in aging in chemical and physical characteristics of a foamed polystyrene sheet occurs after the extrusion.

In this embodiment, when a foamed polystyrene sheet is produced by the use of a single gas of mainly nitrogen as a foaming agent, DTDA as high molecular weight ester, liquid polybutene as a wetting agent, which has such a molecular weight range as to have a kinematic viscosity coefficient (cSt 100°C) of 70 to 2700, and sodium bicarbonate and citric acid as a nucleating agent, it has been confirmed that the required rotating speed of the screw of each extruder is lowered and the amount of current required for extrusion is lowered, thus achieving improved extrusion processability.

The amount of the nucleating agent required for producing a sheet having the same degree of foam cells can be greatly reduced by using polybutene and DTDA. For example, for a sheet for labels to which high white (cream white) degree is demanded, the amount of the nucleating agent can be reduced to about 43% of the conventional process, and thus it has been confirmed that the foaming efficiency of the nucleating agent can be greatly improved.
Thus, in the process for production of foamed polystyrene sheet using polybutene and DTDA, it is possible to control the cell density by the control of the amount thereof to be used, therefore achieve excellent controllability of the opacity (white degree), and thus produce a foamed polystyrene sheet that is excellent in smoothness or other characteristics suitable for printing. In addition, it is possible to greatly reduce the amount of polybutene to be incorporated, and thereby provide a sheet that is excellent because it is unlikely to cause substantial changes in physical characteristics, such as changes in heat, shrinkage ratio, gage bands and the like.
The use of polybutene produces an advantage from the point of view of machine maintenance that contamination by a low molecular weight polystyrene "built-up polystyrene" usually generated in an extrusion die are not caused, and the number of times to clean the die surface can be reduced. It is assumed that this is achieved by the self-cleaning effect of polybutene incorporated therein.

As a best mode, more specifically, general purpose polystyrene (GPPS) as the polystyrene and a mixture of sodium bicarbonate and citric acid as the nucleating agent are introduced into a first extruder of a tandem extruder system with a screw diameter of 4.5 inches, while commercially available polybutene having a kinematic viscosity coefficient (cSt 100°C) of 200 to 235 is used as the wetting agent, also commercially available ditridecyl adipate (DTDA) is used as the high polymer weight ester, and a mixture of polybutene and DTDA with a mixing ratio of 50:50 is introduced into the first extruder in the same manner as above, thereby producing molten polystyrene. Then, nitrogen gas as the foaming agent is injected into the molten polystyrene molten in the first extruder, and then transferred into a second extruder with a screw diameter of 6 inches and mixed, thereby providing a resin composition, and this resin composition is cooled to a temperature (149 to 163°C) suitable for extrusion and then extruded into a continuous sheet form in this temperature range. Specifically, the polystyrene composition is continuously extruded through a die at an outlet of the second extruder, thereby providing a foamed polystyrene sheet having foam cells. Furthermore, at the same time of extrusion, the sheet is cooled with air via the inside and outside surfaces of the sheet, and stretching is carried out at the same time of blowing-up before its temperature reaches the temperature of a glass transition point, thus carrying out the stretching process. Then, the sheet is passed through a cooling mandrel, thereby cooled, and then wound up onto a reel. Thus, a rolled, heat shrinkable foamed polystyrene sheet having a thickness of 175 µm is produced.

In this production, a single gas of nitrogen is used as the foaming agent, and polybutene is used in place of white mineral oil of the conventional process, with the result that the electric current required for extrusion of foamed polystyrene is greatly reduced, and, for example, it has been confirmed that a current value of 214 amperes, which is conventionally required for extrusion of polystyrene of 250 kg per one hour, can be lowered to 166 amperes, and at the same time, the screw speed within each extruder required for extrusion of a predetermined amount can be reduced from a conventional screw speed of 41 rpm to 36 rpm. Accordingly, a great saving of extrusion energy (22.4%) can be achieved, and thus the productivity can be greatly improved, which leads to the reduction of the production cost (cf. Examples described below).

It is also possible to produce a foamed styrene sheet having high white degree, which means production of smaller cells. Whereby, the polystyrene surface properties can be further improved by controlling polybutene and DTDA, which leads to the improvement in physical characteristics, such as sheet stiffness.

Furthermore, polybutene is excellent in stability at high temperature, and therefore in usual use environment including storage of a foamed polystyrene sheet, it is unlikely to change the dimension of the sheet such as a sheet thickness, thus providing a foamed polystyrene sheet showing no substantial change in aging. This is a practical advantage and one of the features of this embodiment. Furthermore, incorporation of polybutene can prevent internal contamination due to build-up of polystyrene on the screw within an extruder, and prevent build-up on the screw after the long time operation. Thus, the screw can be kept clean for a long time. In the conventional process, all the processes must be stopped for this cleaning, and from this point of view, it can be said that the process of this embodiment is advantageous.
It has been confirmed that sheet breakage, which sometimes occur in the conventional process, can be prevented by the process of this embodiment.

This embodiment was described by taking for example the case where there are used polystyrene or the like as the thermoplastic resin, polybutene or the like as the wetting agent, ditridecyl adipate (DTDA) or the like as the high molecular weight ester, and a single gas of nitrogen or the like as the foaming agent, without intention to limit the present invention to this embodiment. For example, it is possible to use a thermoplastic olefin resin as the thermoplastic resin, a wetting agent having a kinematic viscosity equivalent to that of the aforesaid polybutene mixture or to that of the aforesaid polybutene as the wetting agent, high molecular weight ester other than DATA or the aforesaid high molecular weight ester mixture as the high molecular weight ester. Furthermore, as the foaming agent, it is possible to use a single gas of carbon dioxide other than a single gas of nitrogen, and it is possible to use general atmospheric gas, as well as a mixed gas of nitrogen and carbon dioxide.
Furthermore, this embodiment was described by taking for example the case where a single layer sheet is extruded. In this regard, it is a matter of course that the present invention is applicable to the production of a multi-layer sheet, as well.

### EXAMPLES

### Examples 1 to 5

As raw polystyrene, general purpose polystyrene GPPS (Mw: 300000) manufactured by Dow Chemical is used.
As a nucleating agent, a mixture of sodium bicarbonate and citric acid manufactured by Henley Chemicals, Inc. is used. As a wetting agent, polybutene manufactured by Amoco Chemicals Corp. is used.
For the purpose of improving the extrusion formability, polybutene manufactured by Amoco Chemicals Corp. is used as a wetting agent.
Polybutene used in Examples 1 to 5 are, in this order: polybutene No. 1 having a kinematic viscosity coefficient (cSt 100°C) of 70 to 78, polybutene No. 2 of 100 to 115, polybutene No. 3 of 200 to 235, polybutene No. 4 of 605 to 655 and polybutene No. 5 of 2300 to 2700 (cf. Table 1).
As high molecular weight ester, commercially available ditridecyl adipate (DTDA) is used in each of Examples.
Equal amounts of high molecular weight ester and polybutene are mixed so that the polybutene and the high molecular weight ester are used in a mixture form.
As a foaming agent, high pressure nitrogen (a single gas of 2.068 × 10⁵ Pa) is used, and is used in such an amount as to have a concentration of 1 wt% in the resin composition.
According to a specific extrusion molding, raw polystyrene, a nucleating agent and a mixture of polybutene and DTDA are mixed and molten within a temperature range of 220°C at a first extruder (4.5 inch extruder) of a two-stage tandem type screw extrusion system so as to have 96.68 wt% of the raw polystyrene, 0.318 wt% of the nucleating agent, 1 wt% of the polybutene and 1 wt% of DTDA, thereby providing a resin composition, and then a predetermined amount of a single gas of high pressure nitrogen is injected through a rear side of the first extruder, and this molten resin composition is transferred to the second extruder, at which it is cooled from 220°C to 163°C, and then is extruded within an extrusion temperature range of 163 to 149°C at the second extruder. Thus, a hollow cylindrical film (web) is produced.
Then, the cylindrical film just after the extrusion is blowing up (expanded) towards the circumferential side by introducing air inside the web and stretched in the circumferential direction until it reaches a blowing-up ratio of 2.05 (i.e., the ratio of the diameter of the cooling mandrel relative to the extrusion annular die), and at the same time is pulled by a film take-up roll, thereby stretching the film in the machine direction, as well.
Then, the hollow cylindrical film is passed through the cooling mandrel to be cooled, and then is cooled by atmospheric gas through the inside and outside of the hollow film. The thickness of the film having a single layer is 175 µm.

### Comparative Example 1

A hollow cylindrical film is produced in the same manner as in Examples 1 to 5 except that white mineral oil is used without using polybutene and high molecular weight ester, and raw polystyrene and white mineral oil are mixed and molten to have 1 wt% of white mineral oil contained in a resin composition.
The molecular weights and the kinematic viscosity coefficients of polybutene, high molecular weight ester and white mineral oil used in each of Examples and Comparative Example are shown in Table 1.

**[Table 1]**

| Characteristics | Polybutene, High Molecular Weight Ester and Mineral Oil used | | | | | | |
|---|---|---|---|---|---|---|---|
| | Polybutene | | | | | High Molecular Weight Ester | White Mineral Oil |
| | No.1 | No.2 | No.3 | No.4 | No.5 | DTDA | |
| Number Average Molecular Weight (Mn) | 700 | 800 | 910 | 1300 | 2100 | (510)* | - |
| Kinematic Viscosity Coefficient cSt 100°C | 70-78 | 100-115 | 200-235 | 605-655 | 2300-2700 | 5.4 | 5.8 |

| | | | | | | | |
|---|---|---|---|---|---|---|---|
| * Value in the parenthesis represents molecular weight | | | | | | | |

### 1) Test 1 (Evaluation of motor current of an extruder and rotational speed of an extruder screw)

In each of Examples 1 to 5 and Comparative Example 1, the current value and the screw rotational speed are measured when a resin composition is extruded through the second extruder die at a rate of 250 kg per one hour.

### 2) Test 2 (Evaluation of contaminations on the screw in extruder)

The production, following each of Examples 1 to 5 and Comparative Example 1, is continued for 45 days, and the presence and absence of resin build-up on the screw surface is checked by visual observation.

### 3) Test 3 (Evaluation of whiteness (i.e., dispersibility of cells))

The ratio between the reflectance of visible light (550 nm) of the film produced in each of Examples 1 to 5 and Comparative Example 1, and the reflectance of visible light (550 nm) to a 99 wt% barium sulfate white plate is measured by a spectro-photometric colorimeter (TECH WORLD Inc., MOMS-3000).

### 4) Test 4 (Evaluation of Surface smoothness)

Whether there is a difference in terms of suitability for printing between those of Examples 1 to 5 and that of Comparative Example 1 (i.e., article of utility) is evaluated.

### 5) Test 5 (Evaluation of stiffness)

Sensory evaluation is performed as to whether there is a difference between those of Examples 1 to 5 and that of Comparative Example 1.

### 6) Test 6 (Evaluation of Sheet breakage)

Visual evaluation is performed for Examples 1 to 5 and Comparative Example 1.

The results of the respective tests will be shown in the following Table 2 and the like.

**[Table 2]**

| | Motor Current of Extruder | Rotational Speed of Extruder Screw | Contaminations on the Extruder Screw | Whiteness of Film |
|---|---|---|---|---|
| Example 1 | 180 amps | 38 rpm | Not Found | 83 |
| Example 2 | 175 amps | 37 rpm | Not Found | 82 |
| Example 3 | 166 amps | 36 rpm | Not Found | 83 |
| Example 4 | 195 amps | 39 rpm | Not Found | 80 |
| Example 5 | 200 amps | 40 rpm | Not Found | 79 |
| Comparative Example 1 | 214 amps | 41 rpm | Found | 77 |

As being apparent from Table 2, for those using any polybutene, the extrusion processability is improved and the current value of a motor of a 4.5 inch extruder is lowered.
Especially, in Example 3 using polybutene No. 3, a current value of 214 amperes, which is required in the conventional process (Comparative Example 1), is lowered to 166 amperes, thus enabling extrusion by a smaller energy. Furthermore, the screw rotational speed required for extrusion of a predetermined amount (250 kg/hrs) of a resin composition is lowered from 46 rpm to 36 rpm, thus achieving a great effect of saving the energy to be consumed.
There is no change in heat shrinkability of an extruded foamed polystyrene sheet due to incorporation of polybutene, and the characteristics, such as surface smoothness, stiffness and opacity (whiteness) are satisfactory for labels to be put into practical use.
In Examples 1 to 5, the nucleating agent is used in an amount equal to the amount conventionally used (Comparative Example 1), but its opacity (whiteness) exceeds the white degree required for label printing.
In terms of maintaining the surface smoothness for labels, only about 43% of the nucleating agent compared with the amount thereof conventionally used (0.136 wt% relative to a resin composition) is sufficient on the calculation basis.
Furthermore, in Examples 1 to 5, sheet breakage, which occurs in Comparative Example 1 using mineral white oil of the conventional process, is prevented, and no contaminations are caused on the screw inside of the extruder (which was confirmed after the use for consecutive 45 days), and thus it is possible to extend the period of time during which the screw can be appropriately used, and produce a great advantage in production of foamed polystyrene.

### Examples 6 to 9 Comparative Example 2, Comparative Example 3

As shown in Table 3, a hollow cylindrical film is produced in the same manner as in Example 3 except that the amount of polybutene to be used and the amount of ditridecyl adipate (DTDA) are changed (the total amount of them of any one of Examples and Comparative Examples is 2 wt% relative to a resin composition).

### 7) Test 7 (Evaluation of Extrusion Characteristics)

Influences on the extrusion characteristics by the mixing ratio of polybutene and ditridecyl adipate (DTDA) are investigated for Example 3, Examples 6 to 9 and Comparative Examples 1 to 3.
As the extrusion characteristics, the thickness of the cylindrical film is measured every 1 cm in the circumferential direction by a micrometer, and its variations are evaluated into the following three levels.
++ : Thickness variation exceeds ±3% but not exceed ±5%
+++ : Thickness variation exceeds ±1.5% but not exceed ±3%
+++++ : Thickness variation does not exceed ±1.5%
Also, in the same manner as in Text Example 1, the current value of the motor of the extruder and the screw rotational speed of the extruder are measured. 8) Test 8 (Evaluation of Heat Shrinkability)
The hollow cylindrical film of each of Examples 1 to 9 and Comparative Example 1 (Film: 175 µm) is cut into a square piece of 100 mm by 100 mm, is left in an oven heated to 90°C for 12 seconds, then taken out of the oven and its size is measured. Thus, the shrinking percentage is determined.
The result of Test 7 is shown in Table 3 and the result of Test 8 is shown in Table 4.

**[Table 3]**

| | Polybutene No. 3 : DTDA | Evaluation on Extrusion Characteristics* | Current of Extruder Motor | Rotational speed of Extruder Screw | Remarks |
|---|---|---|---|---|---|
| Example 6 | 20:80 | ++ | 190 amps | 41 rpm | |
| Example 7 | 25:75 | +++ | 175 amps | 39 rpm | |
| Example 3 | 50:50 | +++++ | 166 amps | 36 rpm | |
| Example 8 | 75:25 | +++ | 180 amps | 38 rpm | |
| Example 9 | 80:20 | ++ | 192 amps | 40 rpm | |
| Comparative Example 2 | 100:0 | | 250 amps | 50 rpm | A cylindrical film is unevenly extruded and partly broken. |
| Comparative Example 3 | 0:100 | | 190 amps | 40 rpm | A cylindrical film is unevenly extruded. |
| Comparative Example 1 | White Mineral Oil (1 wt%) | +++ | 214 amps | 41 rpm | |

**[Table 4]**

| | Ex. 1 | Ex. 2 | Ex. 3 | Ex. 4 | Ex. 5 | Ex. 6. | Ex. 7 | Ex. 8 | 9 Ex. | Comp. Ex. 1 |
|---|---|---|---|---|---|---|---|---|---|---|
| Heat Shrinkage Ratio | 35% | 38% | 41% | 39% | 30 % | 37% | 35% | 30 % | 25% | 30 % |

As being apparent from Table 3, regardless of the small amount of the incorporated DTDA, which acts as a plasticizer to adjust the viscosity, the consumed current value required for extrusion of those containing polybutene is small, which contributes to the saving of extrusion energy. It is also confirmed that the rotational speed of the extruder screw required for extrusion of a predetermined amount (250 kg/hrs) of a polystyrene composition is small.
In Comparative Example 2, in which polybutene is contained 100 wt% while no DATA is incorporated, the viscosity coefficient (70 to 2700 cSt 100°C) of polybutene is greater than that (5.4 cSt 100°C) of ditridecyl adipate, and therefore the viscosity of the molten polystyrene composition is high. Consequently, the extrusion processability is lowered than that of Example 3 using a mixture of equal amounts of ditridecyl adipate and polybutene (mixing ratio 1:1). On the other hand, in Comparative Example 3, in which no polybutene is incorporated while only ditridecyl adipate is incorporated, the viscosity coefficient (5.4 cSt 100°C) of DATA is small, and therefore the viscosity of the polystyrene composition becomes too small, which makes the composition unsuitable for extrusion molding and hence necessitates the same to be mixed with polybutene.
Consequently, the optimum proportion became 50:50, but the extrusion processability is excellent compared with the extrusion processability in Comparative Example 1 in which white mineral oil (kinematic viscosity coefficient 5.8 cSt 100°C), provided that the mixing ratio of polybutene and ditridecyl adipate is between 25:75 to 75:25. Also, in terms of the physical and chemical characteristics of a foamed polystyrene sheet (heat shrinkability, dimensional stability in aging, stability of a gauge band (shape stability as a coil), performance for maintaining the characteristics suitable for printing for a long time, etc.), the composition having the above mixing ratio can be put into practical use as a heat shrinkable label, similar to the sheet of Example 3.

As being apparent from the results of these tests, according to the process of the present invention, the extrusion processability of molten polystyrene by, for example, a two-stage tandem type extrusion system or the like is excellent and the amount of a foaming agent to be used can be reduced. In addition, a substantial amount of a foaming agent is not left in a foam sheet after extrusion and cooling, and thus the foamed cell size can be controlled to be small. Furthermore, since the surface of a foam sheet can be controlled to have desired characteristics and the thus produced sheet is excellent in dimensional stability, it is suitable for printing and can be a heat shrinkable label material. Consequently, polybutene and the like incorporated as a wetting agent act not only to lubricate and disperse a nucleating agent, but also to provide a solvation effect since it is non-volatile, and therefore are assumed to lower the viscosity of the molten polystyrene by the synergistic effect with high molecular weight ester that acts as a plasticizer, and hence have greatly contributed to the improvement of extrusion processability of a foamed polystyrene.
For production of foamed polystyrene sheet, a foaming agent having no environmental problems, such as carbon dioxide gas and nitrogen, are used for more than a decade, in place of chlorofluorocarbon, and alkanes such as butane and pentane, which put a great burden on the environment, and there was proposed a production process which is excellent in the physical and chemical characteristics of the thus produced foamed polystyrene sheet, and the mechanical characteristics such as thickness control. According to the present invention, while using these as bases, there is provided a process, which makes it possible to produce foamed polystyrene sheet with high extrusion processability and greatly save the energy to be used as compared with the conventional process, as well as reduce the amounts of various additives to be used, and thus achieve great reduction of the production cost.

## Claims

1. A process for production of foamed resin sheet by extruding a thermoplastic resin prepared by incorporating a nucleating agent and a foaming agent consisting of a gas containing at least one of nitrogen and carbon dioxide into a thermoplastic resin, **characterized in that** the process further comprises incorporating into the said thermoplastic resin, high molecular weight ester and a wetting agent having a kinematic viscosity coefficient (a kinematic viscosity coefficient at 100°C; centistokes) of 70 to 2700.

2. A process for production of foamed resin sheet according to claim 1, wherein the nucleating agent is a mixture of sodium bicarbonate and citric acid.

3. A process for production of foamed resin sheet according to any one of claims 1 and 2, wherein the mixing ratio of the wetting agent and the high molecular weight ester in the thermoplastic resin composition is in the range of 25:75 to 75:25 on a weight basis.

4. A process for production of foamed resin sheet according to any one of claims 1 to 3, wherein the wetting agent is polybutene.

5. A process for production of foamed resin sheet according to claim 4, wherein the number average molecular weight (Mn) of the polybutene is 700 to 2100.

6. A process for production of foamed resin sheet according to any one of claims 1 to 5 wherein the high molecular weight ester is at least one of ditridecyl adipate, diisodecyl adipate and trioctyl trimellitate.
